## Europäisches Patentamt
## European Patent Office
## Office européen des brevets

(19)

(11) Numéro de publication: **0 223 724 B1**

(12) # FASCICULE DE BREVET EUROPEEN

(45) Date de publication du fascicule du brevet:
**17.05.89**

(51) Int. Cl.⁴: **A01K 1/01**, A01K 1/035

(21) Numéro de dépôt: **86430038.9**

(22) Date de dépôt: **10.10.86**

(54) **Ensemble hygiénique prêt à l'emploi pour chats.**

(30) Priorité: **06.11.85 FR 8516790**

(43) Date de publication de la demande:
**27.05.87 Bulletin 87/22**

(45) Mention de la délivrance du brevet:
**17.05.89 Bulletin 89/20**

(84) Etats contractants désignés:
**AT BE CH DE FR GB IT LI NL**

(56) Documents cités:
**US-A- 3 154 052**
**US-A- 4 171 680**

(73) Titulaire: **Coppola, Claude, "Le Santa Cruz" 88, avenue de Nice, F-06170 Cros-de-Cagnes(FR)**

(72) Inventeur: **Coppola, Claude, "Le Santa Cruz" 88, avenue de Nice, F-06170 Cros-de-Cagnes(FR)**

ACTORUM AG

## Description

La présente invention concerne un bac hygiénique pour chats, ou animal similaire, prêt à l'emploi et jetable. Ce bac peut faire partie d'un dispositif composé de bacs empilés, emboîtés ou gerbés les uns dans les autres et renfermant pour chacun d'entre eux une "litière complète pour chats", l'ensemble admis dans un carton doté d'une poignée devient compact et transportable. Chaque bac désolidarisé d'ensemble est jetable après usage et destiné à supprimer tous les inconvénients découlant de l'emploi de produits et de techniques actuellement utilisés.

Il faut savoir que c'est dans un bac (récipient ou réceptacle) que l'on met à la disposition des chats servant à recevoir leurs excréments et urines dans lequel l'on a préalablement introduit des granulés d'argile, du sable, de la sciure ou tout autre produit absorbant que l'on nomme "litière".

L'animal vient y faire ses besoins et dans un mouvement naturel les recouvrira avant de quitter l'endroit. Ce comportement de l'animal qui est simple en soit, engendre dans les faits pour son bien être et la commodité du propriétaire, un ensemble d'actions particulièrement contraignantes et malaisées.

En effet, cela commence au point d'achat du produit absorbant dit "litière" vendue généralement en sacs papiers pesant 5 kg en moyenne. Ces sacs sont souvent recouverts de poussière se dispersant par capillarité de l'intérieur des sacs voisins, parfois même percés, l'on imagine le désagrément que provoque leur proximité avec les aliments dans le chariot de la ménagère.

Afin de préparer la nouvelle "litière", la ménagère doit tout d'abord se débarrasser de celle usagée se trouvant dans le bac et procéder ensuite au nettoyage de celui-ci.

Pour ce faire, elle doit saisir le bac généralement souillé sur les bords et déverser son contenu malodorant dans une poubelle ou directement dans le vide-ordures.

D'où obligation de manipulations ragoûtantes de rémanence d'odeurs, de risques de pollution.

Commence alors la corvée de nettoyage du bac, afin de l'en débarasser des excréments restés collés au fond et sur les parties latérales. Ceci s'effectuant généralement dans un lieu domestique, tel que cuisine ou office ou encore dans la salle de bains ou toilettes, au risque d'obstruer les appareils et les canalisations. Ce qui contrevient formellement aux normes d'hygiène et de sécurité dans les habitations.

Pour finir, la ménagère doit épandre le produit absorbant "frais" dans le bac fin propre. Cette opération est toujours longue, malaisée, poussiéreuse et comporte des risques d'éparpillement accidentel du produit absorbant. De plus, il implique un dosage approximatif de celui-ci, donc pas assez efficace ou coûteux. D'autre part, le stockage du sac papier dans lequel reste contenu le produit absorbant pour les prochaines opérations pose souvent un problème d'emplacement du fait de la poussière qui s'en dégage.

Il existe des procédés permettant par d'autres techniques, d'obtenir des résultats analogues à ceux poroposés par l'auteur du présent descriptif. Elles tendent à rationnaliser l'utilisation traditionnelle du bac et de la litière telle que décrite précédemment, soit en disposant au fond du bac un "Pack" en forme de barquette amovible faisant office de drain, soir en disposant autour du bac un sac plastique permettant le ramassage des déchets ou encore par la présentation d'un bac de forme originale de cabine à cellules multiples, également d'un bac unique jetable fermé dans sa partie supérieure par un complexe en papier collé. Il est à noter qu'il existe aussi un dispositif présenté sous la forme d'une boîte, formant en position ouverte un réceptacle, avec un fond et des parois et contenant une litière dans le fond du bac, ledit bac étant après usage replié pour être jeté avec sa litière.

Du tels dispositifs sont pour certains d'un emploi difficile, pour d'autres trop encombrants, délicats à stocker et coûteux.

Le dispositif suivant l'invention permet déviter ces inconvénients en raison de la conception originale du bac tout en restant dans un principe d'exploitation commun à la pratique d'utilisation classique.

De façon précise, la présente invention a donc pour objet de proposer un bac hygiénique avec litière, d'une structure originale permettant son emboîtement avec d'autres bacs identiques de façon à pouvoir transparter un ensemble de bacs dans un emballage approprié.

Individuellement, chaque bac, dont la forme peut varier suivant le coût de fabrication, comportera un épaulement tout autour des parois latérales et vers l'intérieur sur lequel viendra se coller une pellicule thermoscellée.

Cet épaulement pouvant être obtenu directement dans la structure du bac, ou encore par le positionnement d'entretoises supportant la feuille de maintien collée ou thermoscellée, elle-même maintenant le produit absorbant. Cette feuille de maintien offrant la possibilité d'être découpée ou étant dotée d'une languette permettant son arrachement afin de découvrir la litière prête à l'emploi. C'est cette pellicule placée à une hauteur donnée à l'intérieur du bac, permettant ainsi la protection et le maintien du produit absorbant ou "litière", qui caractérise l'originalité de l'invention.

Lorsque l'on désolidarisera un bac de l'ensemble, il suffira de découper à l'aide d'un tranchant ou bien d'arracher la pellicule collée ou thermoscellée à l'aide d'une languette placée à cet effet, pour découvrir la litière. On obtiendra ainsi un bac prêt à l'emploi. Après utilisation dudit bac, il suffira d'en rapprocher les deux bords opposés afin de constituer une boîte. Un système mâle/femelle disposé de part et d'autre du bac permettra par un simple pression de maintenir close la boîte ainsi formée, évitant tous risques de déversement accidentel et garantissant des conditions d'hygiène optimums. Afin de faciliter le pliage du bac en son centre pour constituer la "boîte à jeter", l'on pourra prévoir un pré-pliage sous forme d'arête au fond du bac ainsi qu'une structure en forme de soufflets d'accordéon sur les parties latérales dans le prolongement de la pré-pliure centrale.

Il est à préciser que la nature du produit absorbant dit "litière", peut varier suivant le coût recherché. Il est à préciser également que la pellicule thermoscellée ainsi que le carton d'emballage de l'ensemble pourront individuellement ou ensemble, comporter des indications publicitaires, marque de distribution, mode d'emploi et spécificité du produit.

En se référant aux dessins annexés, il est donné à titre d'exemple non limitatif, un mode de réalisation.

Planche – 1/7: Coupe du bac (1) et de son épaulement caractéristique (8), comportant sa litière prête à l'emploi (7) maintenue par une feuille collée ou thermoscellé (9), elle-même dotée d'une languette permettant l'arrachement afin de découvrir la litière, ou offrant la possibilité d'être découpée dans son pourtour à l'aide d'un objet tranchant.

Planche – 2/7: Coupe de 6 bacs (1), (2), (3), (4), (5), (6), empilés, emboîtés ou gerbés les uns dans les autres, chacun d'entre eux comportant sa litière (7), tels qu'ils se présenteront au sortir de l'emballage.

Planche – 3/7: Coupe de 3 bacs légèrement désolidarisés de leur emboîtement d'origine, chacun d'entre eux comportant sa litière prête à l'emploi (7) maintenue par une feuille collée ou thermoscellée (9).

Planche – 4/7: Plan du bac vu de dessus, mettant en évidence:
– épaulement permettant la fixation de la feuille collée ou thermoscellée (8)
– soufflets permettant le repliage du bac sur lui-même (10), (11)
– arêtes ou soufflets facilitant le repliage du bac (12)

Planche – 5/7: Perspective écorchée de trois bacs légèrement désolidarisés de leur emboîtement d'origine et mettant en évidence les points suivants:
– Litière ou produit ansorbant (7)
– Feuille collée ou thermoscellée assurant le maintien de la litière (9)
– Epaulement permettant la fixation de la feuille collée ou thermoscellée (8)
– Soufflet en éventail facilitant le repli du bac sur lui-même (10)

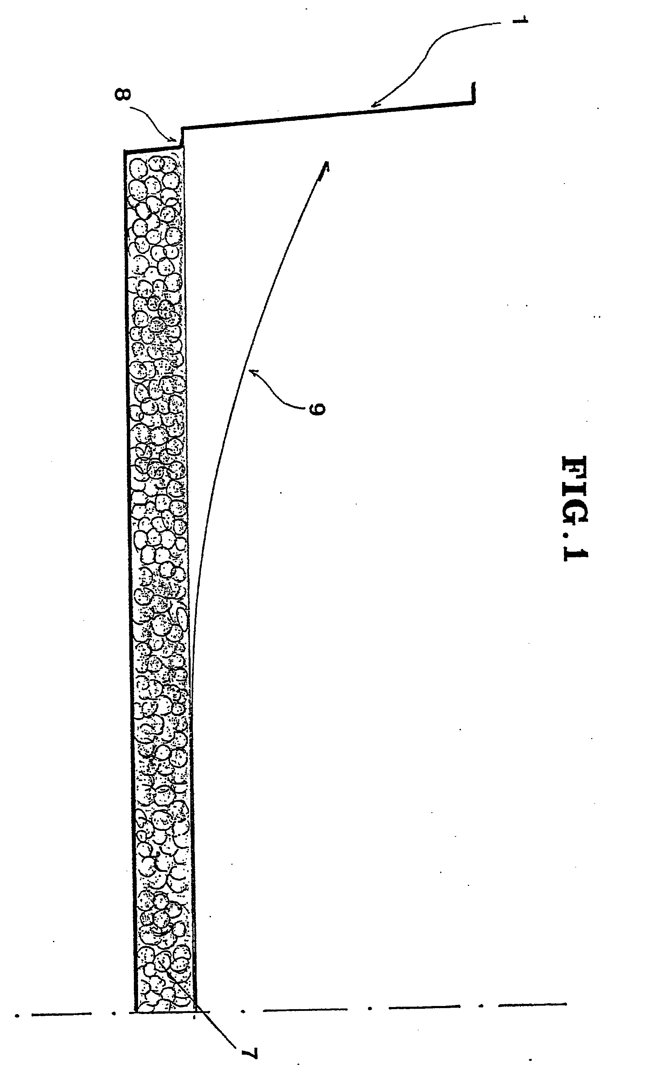

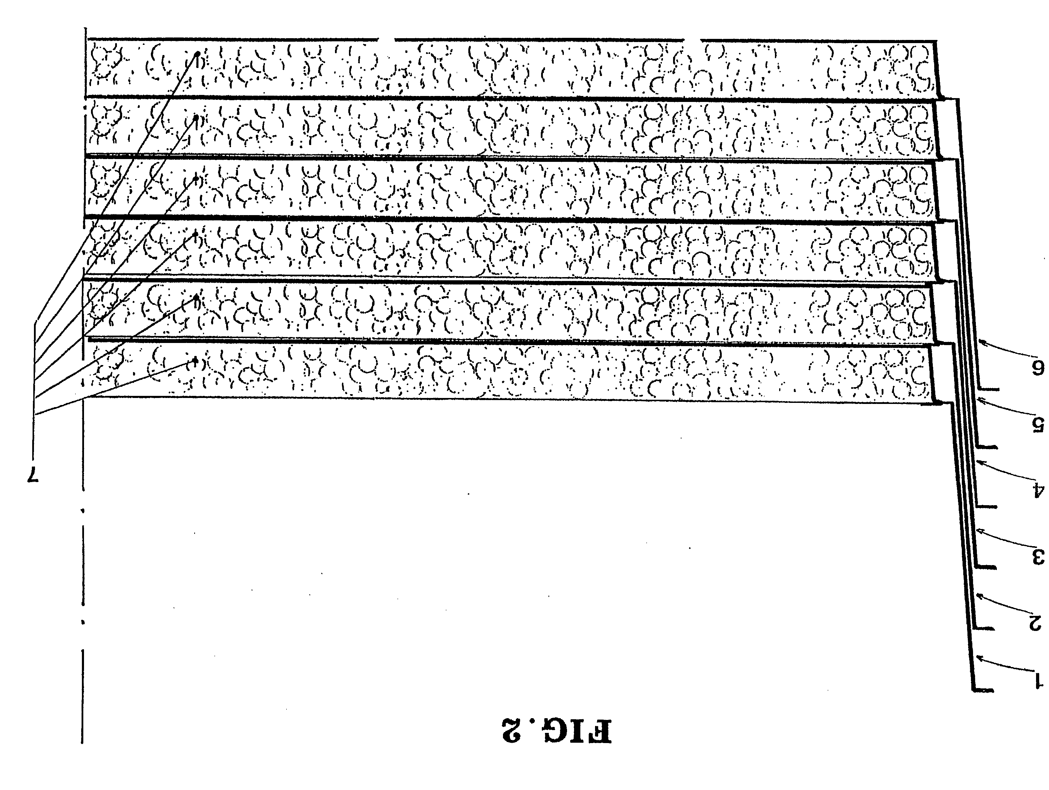

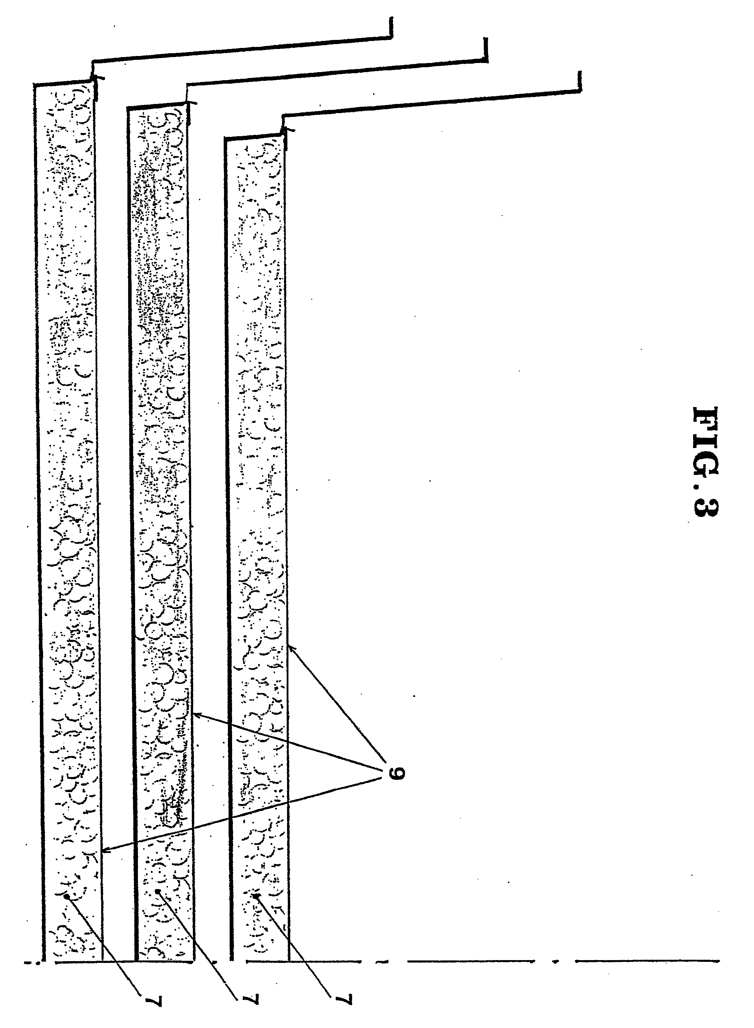

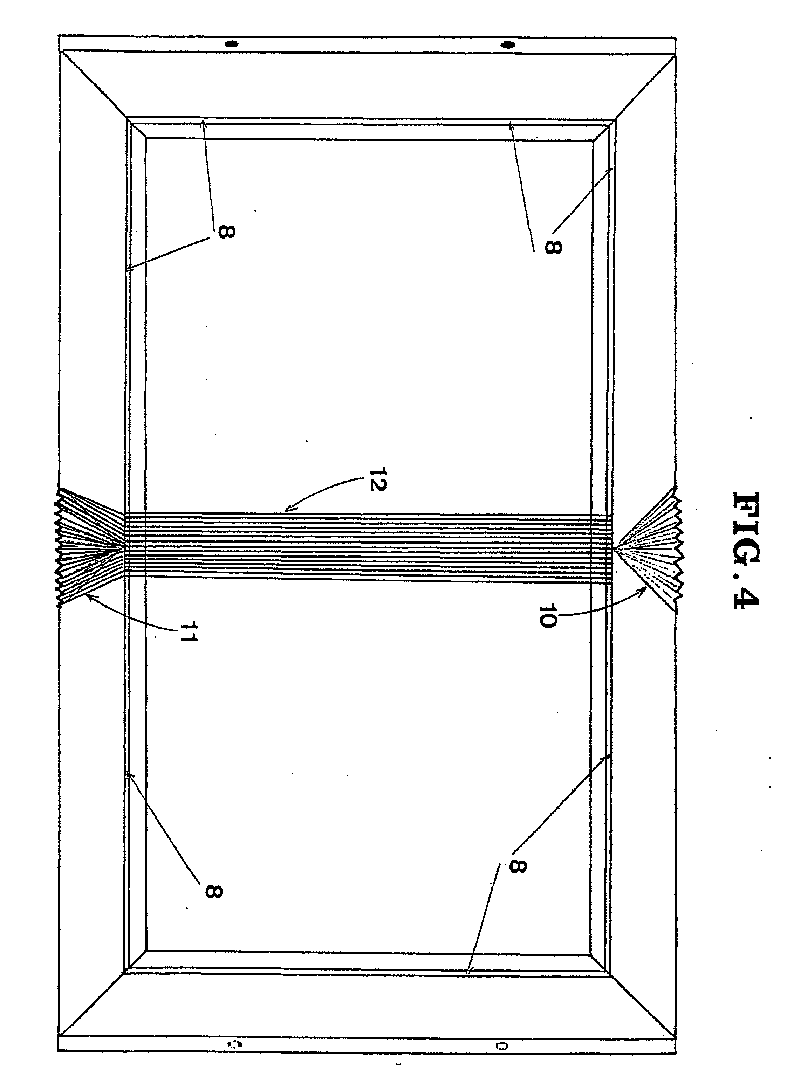

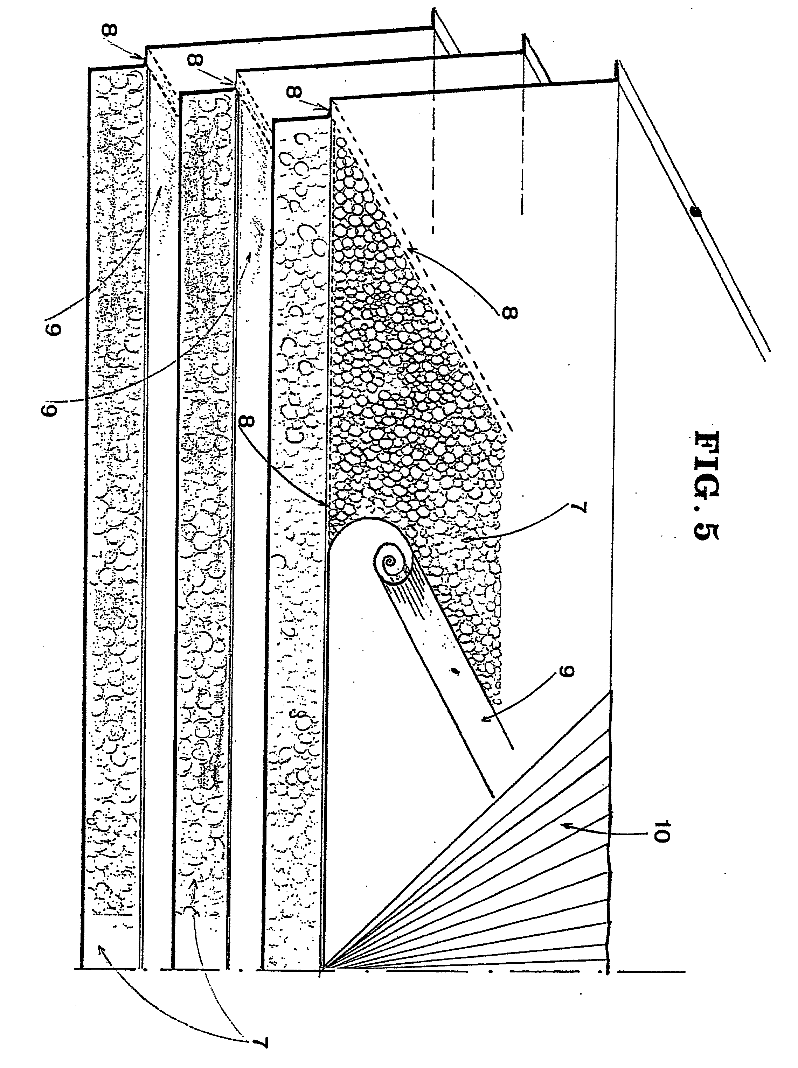

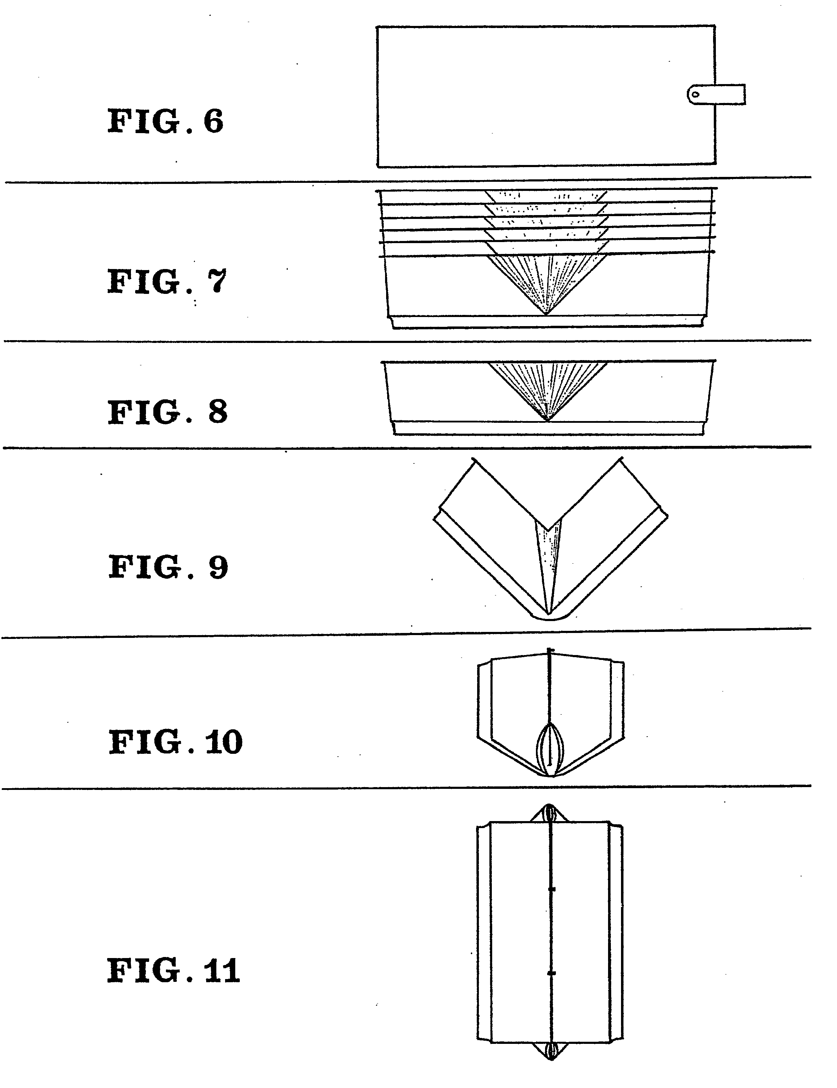

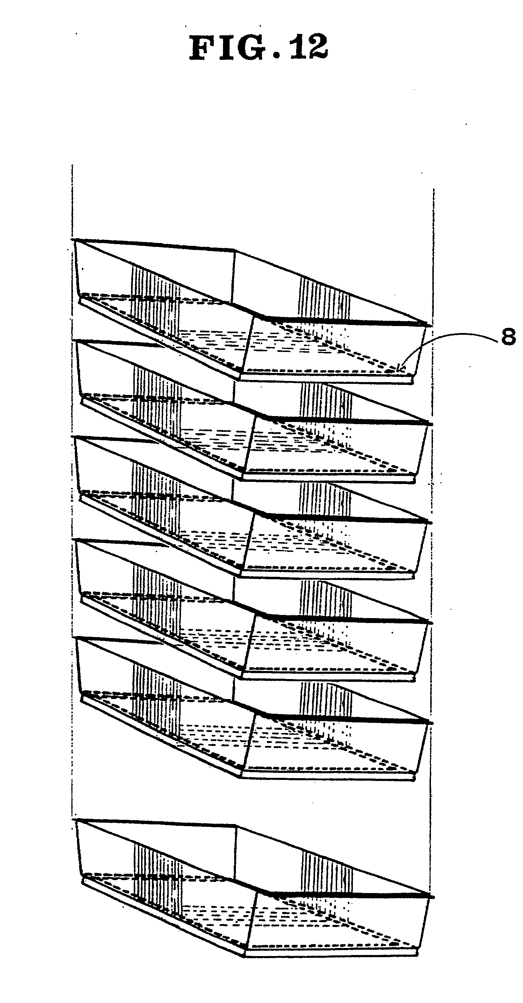

Planche – 6/7 – Figure 6: Vue latérale de la boîte permettant l'emballage des 6 bacs. Celle-ci comportant une poignée facilitant le transport.

Planche – 6/7 – Figure 7: Vue latérale des 6 bacs empilés, emboîtés ou gerbés tels qu'ils se présentent au sortir de leur emballage (avec soufflets ou éventail).

Planche – 6/7 – Figure 8: Vue latérale d'un bac désolidarisé des 5 autres.

Planche – 6/7 Figure 9: Vue latérale d'un bac à demi plié.

Planche – 6/7 – Figure 10: Vue latérale d'un bac totalement replié sur lui même formant ainsi la "boîte à jeter".

Planche – 6/7 – Figure 11: Plan d'un bac totalement replié sur lui-même rendant plus simple le rejet à la poubelle ou dans le vide-ordure automatique.

Planche – 7/7 – Figure 12: Perspective des 6 bacs superposés mettant en relief le principe d'emboîtement, d'empilage ou de gerbage avec litière. Ainsi que la forme particulière des fonds de chacun des bac comportant un épaulement obtenu directement dans la structure du bac, ou encore par le positionnement d'entretoises supportant la feuille de maintien du produit absorbant (8).

## Revendications

1. Bac hygiénique (1) pour chats, ou animaux similaires, prêt à l'emploi et jetable, se composant d'un réceptacle formant, en position ouverte, un bac muni d'un fond relié à de parois latérales contigues entourant ce fond, ce réceptacle contenant sa propre litière (7) et étant apte à être replié sur lui-même pour former une boite fermée, retenant ainsi la litière usagée cet ensemble étant jeté ainsi après usage, caractérisé en e que les parois latérales, en position ouverte du bac, sont inclinées à partir du fond vers l'extérieur de manière à permettre l'emboîtage et le gerbage de plusieurs bacs identiques entre eux, en ce que, pour le maintien avant usage de la litière disposée ur le fond, un épaulement (8) intérieur, ou similaire, est prévu à une hauteur donnée à l'intérieur du bac, épaulement ou similaire sur lequel une pellicule ou feuille de maintien (9) recouvrant et maintenant la litière est fixée par des moyens de fixation qui empêchent une fuite des matières constituant la litière, ladite pellicule étant soit fixée, soit constituée de telle manière qu'elle puisse être facilement retirée pour utiliser le bac, et en ce que le bac possède des moyens de maintien en position close, une fois qu'il a été replié.

2. Bac hygiénique selon la revendication 1, caractérisé en ce que ses parois latérales formées en dépouille (1) (2) (3) (4) (5) (6) permettant par superposition de plusieurs bacs de les empiler et de les emboîter les uns dans les autres, et ce au moyen de la feuille de maintien (9) fixée sur l'épaulement (8) qui procure une surface plane formant assise sur laquelle vient s'appuyer le fond du bac directement emboîté par dessus, formant ainsi un ensemble hygiénique, qui contenu dans un moyen connu muni d'un moyen de préhension connu permettra le transport des bacs, quelqu'en soit le sens, sans déversement de la litière.

3. Bac hygiènique selon la revendication 1, caractérisé en ce que le moyen faisant office d'épaulement est un épaulement disposé tout autour de la partie basse de ses parois en dépouille (1), le dit épaulement étant obtenu directement et vers l'intérieur dans la structure même du bac, de manière à recevoir la fixation d'une feuille de maintien (9).

4. Bac hygiénique selon la revendication 1, caractérisé en ce que le moyen faisant office d'épaulement est une ou plusieurs entretoises dont le positionnement est destiné à recevoir la fixation d'une feuille de maintien (9).

5. Bac hygiénique selon la revendication 1, 2, 3 ou 4, caractérisé en ce que le moyen de fixation de la feuille de maintien (9) qui est fixée sur le moyen faisant office d'épaulement (8) est un procédé de thermoscellage.

6. Bac hygiénique selon la revendication 1, 2, 3 ou 4, caractérisé en ce que le moyen de fixation de la feuille de maintien (9) qui est fixée sur le moyen faisant office d'épaulement (8) est un procédé de collage.

7. Bac hygiénique selon la revendication 1, 2, 3, 4, 5 ou 6, caractérisé en ce que deux parois latéralement opposées comportent des moyens de pliage (10) (11) permettant le repli du bac sur lui-même et sa fermeture par des moyens connus.

8. Bac hygiénique selon la revendication 7, caractérisé en ce que les moyens de pliage sont des souflets.

9. Bac hygiènique selon la revendication 7, caractérisé en ce que les moyens de pliage sont un prépliage sous forme d'arêtes.

10. Bac hygiénique selon la revendication 1, 2, 3, 4, 5, 6 ou 7, caractérisé en ce que le fond dudit bac comporte transversalement des moyens de pliage permettant le repli du bac sur lui-même et sa fermeture par des moyens connus.

## Claims

1. Hygienic, ready-for-use disposable litter-box (1) for cats, or similar pets composed of a recipient which, when in open position, forms a tray the base of which is joined up and surrounded by continuous lateral sides. The receptacle, containing its own litter (7) can be folded up into the shape of a closed box containing the used litter ready for disposal after use characterized in that when in open position, the sides of the tray slant outwards from the base enabling one to stock several identical trays one on top of the other, and in that, in order to maintain the litter on the base before use, an interior shoulder (8) or similar, is accounted for at a certain height on the inside of the tray, a shoulder, or similar, onto which is fixed a film or sheet (9) covering and maintaining the litter materiel in the tray in such a way that avoids spoilage of the material used as litter, the mentioned film being either fixed, or made in such a way, that it can easily be removed for use of the tray which has means to hold in a closed position once it has been refolded.

2. Hygienic tray according to claim 1, characterized by its sloping lateral sides (1) (2) (3) (4) (5) (6) that enable one by the superposition of several trays, to pile them up and to fit them one inside the other, and this by means of the maintaining film (9) fixed onto the shoulder (8) which procures a flat surface onto which rests the bottom of the tray that is directly stacked above thus forming a hygienic assembly which contained in a known way provided with known means of prehension will enable the trays to be transported in whichever direction without spilling the litter.

3. Hygienic tray according to claim 1, characterized by means serving as the shoulder, shoulder which is placed all around the lower part of its slanting walls (1), the said shoulder being obtained directly and towards the inside by the very structure of the tray itself in such a way that a maintaining film (9) can be fixed onto it.

4. Hygienic tray according to claim 1, characterized by the fact that the means composing the shoulder is one or several cross-pieces the position of which destines them to be used as a support onto which a maintaining film (9) is fastened.

5. Hygienic tray according to claim 1, 2, 3 or 4, characterized by the means of attaching the maintaining film (9) which is secured onto the means serving as a shoulder (8) is a thermoconcealed process.

6. Hygienic tray according to claim 1, 2, 3 or 4, characterized by the means of attaching the maintaining film (9) which is secured onto the means serving as a shoulder (8) is an adhesive process.

7. Hygienic tray according to claim 1, 2, 3, 4, 5 or 6, characterized in that two laterally opposed sides have means of folding (10) (11). Enabling the tray to be folded over and closed by known means.

8. Hygienic tray according to claim 7, characterized in that the means of folding are pleats.

9. Hygienic tray according to claim 7, characterized in that the means of folding are preformed pleats.

10. Hygienic tray according to claim 1, 2, 3, 4, 5, 6 or 7, characterized in that the bottom wall has transversal pleats enabling the tray to b folded over and closed by known means.

## Patentansprüche

1. Hygienebehälter (1) für Katzen oder ähnliche Tiere, bereit zum Gebrauch und wegwerfbar. Dieser besteht aus einem Aufnahmebehälter, welcher in geöffneter Position einen Behälter mit Boden formt. Der Boden ist verbunden mit seitlich angrenzenden Wänden, die diesen Boden umgeben. Der Aufnahmebehälter beinhaltet seine eigene Streu (7) und kann so in sich zusammengefaltet werden, dass er einen geschlossenen Kasten formt, um die benutzte Streu aufzuwahren. Dieser Komplex wird nach Gebrauch weggeworfen und ist gekennzeichnet dadurch, dass die Seitenwände bei geöffnetem Behälter vom Boden aus nach aussen geneigt sind, um die Einschachtelung und Stapelung von mehreren gleichen Behältern untereinander zu erlauben. Zur Aufbewahrung der noch nicht benutzten, auf dem Boden verteilten Streu ist eine innere Abstufung (8) oder Ähnliches vorgesehen in einer bestimmten Höhe, im Inneren des Behälters. Auf der Abstufung befindet sich ein Schutzfilm (9), um die Streu abzudecken und aufzubewahren. Der Schutzfilm ist durch eine Halterung befestigt, um zu verhindern, dass die Streu verlorengeht. Besagter Schutzfilm muss so befestigt und so beschaffen sein, dass er leicht abgezogen werden kann, um den Behälter zu benutzen. Der Behälter besitzt ausserdem Verschlussmittel, wenn er zusammengefaltet ist.

2. Hygienebehälter gemäss Anspruch 1, dadurch gekennzeichnet, dass die hüllenförmig angeordneten Seitenwände (1) (2) (3) (4) (5) (6) durch das Aufeinanderstülpen von mehreren Behältern erlauben, diese einzuschachteln und ineinanderzustapeln wegen des Schutzfilms, der auf der Abstufung befestigt ist. Er formt eine glatte Oberfläche, auf der der übergeordnete Behälter steht. So wird ene hygienische Anordnung gebildet, die man mittels einer Tragevorrichtung in jeder Richtung transportieren kann, ohne dass man die Streu verschüttet.

3. Hygienebehälter gemäss Anspruch 1, dadurch gekennzeichnet, dass er eine Abstufung jeglicher Art nach innen besitzt, auf der der Schutzfilm, auf allen Seiten aufliegt.

4. Hygienebehälter gemäss Anspruch 1, dadurch gekennzeichnet, dass die Abstufung aus einer oder mehreren Stützen besteht, deren Lage es ermöglicht, einen Schutzfilm zu befestigen.

5. Hygienebehälter gemäss Anspruch 1, 2, 3 oder 4, dadurch gekennzeichnet, dass der Schutzfilm, der an der Abstufung befestigt ist, durch Thermoversiegelung hält.

6. Hygienebehälter gemäss Anspruch 1, 2, 3, oder 4, dadurch gekennzeichnet, dass der Schutzfilm, der an der Abstufung befestigt ist, durch Kleben hält.

7. Hygienebehälter gemäss Anspruch 1, 2, 3, 4, 5, oder 6, dadurch gekennzeichnet, dass zwei gegenüberliegende Seiten Faltvorrichtungen (10), (11) besitzen, um den Behälter in sich selbst zu falten und zu schliessen durch schon bekannte Massnahmen.

8. Hygienebehälter gemäss Anspruch 7, dadurch gekennzeichnet, dass die Faltvorrichtungen Zieharmonikaverschlüsse sind.

9. Hygienebehälter gemäss Anspruch 7, dadurch gekennzeichnet, dass die Faltvorrichtungen schon grätenförmig vorgefaltet sind.

10. Hygienebehälter gemäss Anspruch 1, 2, 3, 4, 5, 6 oder 7, dadurch gekennzeichnet, dass der Boden des Behälters querschnittmässig angeordnete Falten hat, die es ermöglichen, den Behälter in sich zusammenzufalten und durch bekannte Mittel zu verschliessen.

FIG.1

FIG.2

EP 0 223 724 B1

**FIG. 3**

EP 0 223 724 B1

FIG.4

**FIG. 5**

**FIG. 6**

**FIG. 7**

**FIG. 8**

**FIG. 9**

**FIG. 10**

**FIG. 11**

# FIG.12